(19) 

**Europäisches Patentamt**
**European Patent Office**
**Office européen des brevets**

(11) **EP 4 290 602 B1**

(12) **EUROPEAN PATENT SPECIFICATION**

(45) Date of publication and mention
of the grant of the patent:
**22.04.2026 Bulletin 2026/17**

(21) Application number: **22924556.8**

(22) Date of filing: **29.04.2022**

(51) International Patent Classification (IPC):
*H01M 4/13* (2010.01)        *H01M 10/0525* (2010.01)
*H01M 4/505* (2010.01)       *H01M 4/66* (2006.01)
*H01M 10/052* (2010.01)      *H01M 10/0567* (2010.01)
*H01M 10/0568* (2010.01)     *H01M 4/131* (2010.01)
*H01M 4/525* (2010.01)

(52) Cooperative Patent Classification (CPC):
H01M 4/661; H01M 4/131; H01M 4/505;
H01M 4/525; H01M 4/663; H01M 4/667;
H01M 4/668; H01M 10/052; H01M 10/0567;
H01M 10/0568; Y02E 60/10

(86) International application number:
**PCT/CN2022/090415**

(87) International publication number:
**WO 2023/206405 (02.11.2023 Gazette 2023/44)**

(54) **POSITIVE ELECTRODE PLATE, SECONDARY BATTERY, BATTERY MODULE, BATTERY PACK, AND ELECTRIC APPARATUS**

POSITIVELEKTRODENPLATTE, SEKUNDÄRBATTERIE, BATTERIEMODUL, BATTERIEPACK UND ELEKTRISCHE VORRICHTUNG

PLAQUE D'ÉLECTRODE POSITIVE, BATTERIE SECONDAIRE, MODULE DE BATTERIE, BLOC-BATTERIE ET APPAREIL ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.12.2023 Bulletin 2023/50**

(73) Proprietor: **Contemporary Amperex Technology (Hong Kong) Limited**
**Central, Central And Western District (HK)**

(72) Inventors:
• **ZHANG, Cuiping**
**Ningde, Fujian 352100 (CN)**
• **HAN, Changlong**
**Ningde, Fujian 352100 (CN)**
• **FU, Chenghua**
**Ningde, Fujian 352100 (CN)**
• **REN, Miaomiao**
**Ningde, Fujian 352100 (CN)**

• **CHANG, Wen**
**Ningde, Fujian 352100 (CN)**
• **FAN, Peng**
**Ningde, Fujian 352100 (CN)**

(74) Representative: **Gong, Jinping**
**CocreateIP**
**Neumarkter Straße 21**
**81673 München (DE)**

(56) References cited:
WO-A1-2021/127997      CN-A- 106 816 575
CN-A- 107 611 479      CN-A- 111 952 668
CN-A- 113 410 427      US-A1- 2018 269 464
US-B2- 10 483 548

**(Cont. next page)**

- **BRINKMANN FREEK ET AL: "Primary methods for the measurement of electrolytic conductivity", ACCREDITATION AND QUALITY ASSURANCE, 1 July 2003 (2003-07-01), Berlin/ Heidelberg, pages 346 - 353, XP055928623, ISSN: 0949-1775, Retrieved from the Internet <URL:http://link.springer.com/article/10.1007/ s00769-003-0645-5/fulltext.html> [retrieved on 20241205], DOI: 10.1007/s00769-003-0645-5**

- **EUNICE K WONG ET AL: "Battery Separator Characterization and Evaluation Procedures for NASA's Advanced Lithium-Ion Batteries", 1 May 2010 (2010-05-01), XP055608606, Retrieved from the Internet <URL:https://ntrs.nasa.gov/archive/ nasa/casi.ntrs.nasa.gov/20100021170.pdf> [retrieved on 20241205]**

## Description

TECHNICAL FIELD

The application relates to the technical field of batteries, and more particularly to a cathode plate, a secondary battery, a battery module, a battery pack, and an electric device.

BACKGROUND

The application of lithium-ion battery has gone deep into every aspect in daily life such as camera, notebook computer, electric vehicle, and so on. With the great development of lithium-ion battery technology, people have exerted higher requirements on safety performance, battery cycle performance, and service life thereof. Especially in the field of electric vehicles, how to ensure that lithium-ion batteries have both high safety performance and long cycle performance and service life has become an urgent technical problem to be solved. US10483548B2 describes an electron collector structure comprising a graphene layer. WO2021127997A1 describes preparation of a positive pole piece by mixing materials including a binder and a conductive agent.
CN113410427A describes a positive pole piece comprising a carbon-coated layer comprising a conductive agent and a binder.
CN106816575 describes a positive electrode sheet comprising a positive electrode film including a first binder.
CN111952668A describes a positive electrode slurry including a conductive material and a binder.
CN107611479A describes a positive electrode film including a conductive agent and a binder.

SUMMARY

The application provides a cathode plate as defined in claims 1 to 6, a secondary battery as defined in claims 7 to 11, a battery module as defined in claim 12, a battery pack as defined in claim 13, and an electric device as defined in claim 14. In order to solve the problem in the prior art that the conductive coating provided on the cathode current collector causes the cathode active material layer to be easily stripped.

A first aspect of the present application provides a cathode plate. The cathode plate comprises: a current collector, a conductive coating, and a cathode active layer. The conductive coating is arranged on at least one surface of the current collector, the conductive coating comprises a conductive agent having a weight content of 20% to 50% and a binder having a weight content of 50% to 80%. The cathode active layer is arranged on a surface of the conductive coating away from the current collector, and a cathode active material in the cathode active layer is at least one of a lithium manganate-based cathode material, a ternary cathode material, a quaternary cathode material.

The conductive coating of the cathode plate of the present application alleviates the damage of the cathode active particles to the oxide layer on the surface of the aluminum foil during the cold pressing process, and improves a tensile strength of the electrode plate, it is effectively avoided the problem of the electrode plate breakage caused by oxidation. In addition, on the basis of using the conductive agent to conduct electron conduction between the current collector and the cathode active material, by controlling the amounts of the conductive agent and the binder, not only is the stability of electronic conduction between the current collector and the cathode active material ensured, but also the peel strength between the current collector and the conductive coating is enhanced, thereby effectively solving the problem of the stripping of the cathode active layer, and meanwhile, the cycle performance and cycle stability of the secondary battery containing such cathode plate are effectively improved.

In the first aspect of the present application, when the binder is a conductive binder, and the conductive binder has a volume resistivity of $\leq 10^{-3}$ $\Omega \cdot cm$. Optionally, the conductive coating comprises a conductive agent having a weight content of 20% to 30% and a conductive binder having a weight content of 70% to 80%. In the above embodiment, the conductive binder is used as the binder, on the basis of ensuring the same electronic conductivity, the amount of the conductive agent can be further reduced, and the amount of the binder can be relatively increased, so as to further improve a peel strength between the current collector and the conductive coating.

In any embodiment, the conductive binder is any one or more selected from the group consisting of an epoxy resin conductive adhesive, a silicone resin conductive adhesive, a polyimide resin conductive adhesive, a phenolic resin conductive adhesive, and a polyurethane conductive adhesive. The chemical stability and thermal stability of all the above conductive binders are relatively high, thus satisfying the long-term cycle use of the secondary battery.

In the first aspect of the present application, when the binder is an insulating binder, and the conductive binder has a volume resistivity of $\geq 10^{10}$ $\Omega \cdot cm$. Optionally, the conductive coating comprises a conductive agent having a weight content of 30% to 45% and an insulating binder having a weight content of 55% to 70%. In this embodiment, the binder used is an insulating material, so the conductive agent required therein increases correspondingly, and the above weight content ensures simultaneous optimization of the electronic conduction effect and bonding effect of the conductive coating.

In any embodiment, further optionally, the insulating binder is any one or more selected from the group consisting of PVDF, a polyacrylonitrile, a styrene butadiene rubber, a polyvinyl alcohol, a gum arabic, a xanthan gum, and a polyacrylate. All the above binders have high bonding strength, good compatibility with the conductive agent, and ideal chemical stability, and thermal stability, thus satisfying the long-term cycle use of the secondary battery.

In any embodiment, the conductive agent comprises any one or more selected from the group consisting of an acetylene black (AB), a carbon fiber, a conductive carbon black, a conductive graphite, a single-walled carbon nanotube, a multi-walled carbon nanotube, a graphene nanosheet, a graphene oxide nanosheet, and a micropowdered graphite. All the above conductive agents are conductive agents having high conductivity and commonly used in the field. On the basis of the amount, it is ensured that the conductive coating has good conductivity.

In any embodiment, the conductive coating having a thickness of 0.5 $\mu$m to 5 $\mu$m, optionally, the thickness of the conductive coating is 0.8 $\mu$m to 3 $\mu$m. The conductive coating within the above thickness range can effectively alleviate the damage of the cathode active particles to the oxide layer on the surface of the aluminum foil during the cold pressing process on the basis of effective bonding between the conductive coating and the current collector. In addition, an effective electron conduction channel can be constructed and a secondary battery containing such a cathode plate can be ensured to have a sufficiently high volumetric energy density.

In any embodiment, the current collector is an aluminum foil, optionally, the aluminum foil has a thickness of 8 $\mu$m to 20 $\mu$m, and/or, the current collector has both a longitudinal tensile strength and a transverse tensile strength of ≥175 MPa. To provide better mechanical strength and better meet the long-term cycle use of secondary batteries.

In the first aspect of the present application, the cathode active material comprises at least one of Formulas (I) to (III):

$$Li_{a1}Ni_{x1}Co_{y1}M1_{z1}M2_{1-x1-y1-z1}O_{2-b1} \qquad \text{Formula (I),}$$

$$Li_{a2}Mn_{2-y2}M3_{y2}O_{4-b2} \qquad \text{Formula (II),}$$

and

$$cLi_2MnO_3 \cdot (1-c)Lia_3M4_{x3}O_{2-b3} \qquad \text{Formula (III);}$$

In Formula (I), M1 is Mn and/or Al, M2 is any one or more selected from the group consisting of Mg, Cu, Zn, Al, Sn, B, Ga, Zr, Cr, Sr, V, and Ti, $0.8 \leq a1 < 1.2$, $0 \leq x1 < 1$, $0 \leq y1 \leq 1$, $0 \leq z1 \leq 1$, $x1 + y1 + z1 \leq 1$, $-0.2 \leq b1 \leq 0.2$. In Formula (II), $0.8 \leq a2 < 1.2$, $0.6 \leq y2 \leq 1$, $-0.2 \leq b2 \leq 0.2$, M3 is any one or more selected from the group consisting of Mg, Cu, Zn, Al, Sn, B, Ga, Zr, Cr, Sr, V, and Ti. In Formula (III), $0 < c < 1$, $0 < x3 < 1$, $0.8 < a3 < 1.2$, $-0.2 \leq b3 \leq 0.2$, M4 is any one selected from Ni, Co, and Mn, and any one or more selected from the group consisting of Mg, Cu, Zn, Al, Sn, B, Ga, Zr, Cr, Sr, V, and Ti. The cathode active materials are mainly selected from a lithium manganate-based cathode material, a ternary cathode material, and a quaternary cathode material, in which, the lithium manganate-based cathode material shown in Formula (II) is a doped lithium manganate-based cathode material. Therefore, on the basis of ensuring a high rate, the dissolution of manganese is relatively reduced to ensure a high cycle performance.

A second aspect of the present application provides a secondary battery, comprising: a cathode plate, an anode plate, an electrolyte, and a separator. The cathode plate is any cathode plate according to the first aspect. Since the conductive coating of the cathode plate of the present application alleviates the damage of the cathode active particles to the oxide layer on the surface of the aluminum foil during the cold pressing process, and improves a tensile strength of the electrode plate, it is effectively avoided the problem of the electrode plate breakage caused by oxidation. In addition, by controlling the amounts of the conductive agent and the binder, not only is the stability of electronic conduction between the current collector and the cathode active material ensured, but also the peel strength between the current collector and the conductive coating is enhanced, thereby effectively solving the problem of the stripping of the cathode active layer, and meanwhile, the cycle performance and cycle stability of the secondary battery containing such cathode plate are effectively improved.

In any embodiment of the second aspect, the electrolyte comprises a lithium salt, and the lithium salt is any one or more selected from the group consisting of lithium bisfluorosulfonyl imide, lithium bis(trifluoromethyl)fluorosulfonyl imide, lithium (fluorosulfonyl)(trifluoromethylsulfonyl)imide, lithium (fluorosulfonyl)(pentafluoroethylsulfonyl)imide, lithium (trifluoromethylsulfonyl)(difluoromethylsulfonyl)imide, lithium (fluorosulfonyl) (perfluorobutylsulfonyl) imide, and lithium bis (pentafluoroethylsulfonyl) imide. The application of the above-mentioned fluorine-containing lithium sulfonylimide to the electrolyte improves the high-temperature safety performance of the secondary battery containing such electrolyte.

In any embodiment of the second aspect, optionally, the lithium salt in the electrolyte has a total concentration of 0.6 mol/L to 2 mol/L. Optionally, in the electrolyte, the lithium hexafluorophosphate has a concentration C1 of 0.1 mol/L to 1 mol/L, and the lithium fluorine-containing sulfonimide has a concentration C2 of 0.5 mol/L to 1.5 mol/L. Optionally, $1 \leq$

C2/C1 ≤ 5. Within the above concentration range, the fluorine-containing lithium sulfonylimide can fully improve the conductivity of the electrolyte. By further controlling the concentration ratio of C2 to C1 within the above range, on the one hand, the lithium fluorine-containing sulfonimide can be used to improve the conductivity of the electrolyte, on the other hand, lithium hexafluorophosphate can be oxidized on the cathode current collector during the first charge and discharge to form an aluminum trifluoride thin film, together with the conductive coating, can alleviate the corrosion effect of the fluorine-containing sulfonimide lithium on the current collector, thereby further improving the high-temperature cycle performance of the secondary battery.

In any embodiment of the second aspect, a thickness d of the conductive coating of the cathode plate, the concentration C1 of the lithium hexafluorophosphate and the concentration C2 of the lithium fluorine-containing sulfonimide satisfy the following relational expression: $C2/(5 \times C1) \leq d \leq lg(C2/C1) + 4$, in which, a unit of C1 and C2 is mol/L, and a unit of d is μm. Based on the control of the thickness of the conductive coating, the concentration of lithium hexafluorophosphate, and the concentration of lithium fluorine-containing sulfonimide according to the above relational formula, under a joint action of the three parameters, the high-temperature cycle performance, energy density and corrosion resistance of the secondary battery are better improved.

In any embodiment of the second aspect, the electrolyte further comprises an organic solvent and an additive; and the organic solvent is any one or more selected from the group consisting of dimethyl carbonate, diethyl carbonate, dipropyl carbonate, ethyl methyl carbonate, methyl propyl carbonate, vinyl carbonate, propylene carbonate, vinyl carbonate, propylene carbonate, butylene carbonate, ethyl propyl carbonate, γ-butyrolactone, methyl formate, ethyl acetate, propyl acetate, methyl propionate, ethyl propionate, methyl propionate, and tetrahydrofuran. The above organic solvents are all common organic solvents in this field, and the dispersion performance of lithium salts in such organic solvents is relatively good.

In any embodiment of the second aspect, the organic solvent in the electrolyte has a weight content of 65% to 85%.

In any embodiment of the second aspect, the additive is at least one selected from the group consisting of vinylene carbonate, vinyl sulfate, lithium difluorooxalate borate, lithium difluorophosphate, lithium tetrafluoroborate, 1,3-propane sultone, lithium trifluoromethanesulfonate, and lithium diacetate borate. Those skilled in the art can choose to add the above additives according to the specific performance requirements of the secondary battery. For example, the 1,3-propane sultone can be oxidized at the cathode in advance to alleviate the oxidation of lithium fluorine-containing sulfonimide under high voltage for gas generation, and thus better alleviating the corrosion of the current collector by the lithium fluorine-containing sulfonylimide.

In any embodiment of the second aspect, the additive in the electrolyte has a total weight content of 0.5% to 7%, such that the functions of the additive can be fully played, without affecting the effect of the above lithium salt.

In any embodiment of the second aspect, an anode active material of the anode comprises any one or more selected from the group consisting of a natural graphite, an artificial graphite, a mesophase micro carbon, a hard carbon, a soft carbon, silicon, a silicon-carbon composite, a Li-Sn alloy, a Li-Sn-O alloy, Sn, SnO, $SnO_2$, a lithiated $TiO_2$-$Li_4Ti_5O_{12}$ in a spinel structure, and a Li-Al alloy. The above anodes are all commonly used anodes in secondary electrodes in the field, and those skilled in the art can select a suitable anode material from the above types according to the performance requirements of the secondary battery.

A third aspect of the present application provides a battery module, including a secondary battery, and the secondary battery is any secondary battery according to the second aspect.

A fourth aspect of the present application provides a battery pack, including a battery module, and the battery module is any one of the battery modules according to the third aspect.

A fifth aspect of the present application provides an electric device, including comprises a secondary battery or a battery module or a battery pack, in which, the secondary battery is any secondary battery of the second aspect, and the battery module is any battery module of the third aspect, and the battery pack is any battery pack in the fourth aspect.

Because the cathode plate of the present application has corrosion resistance, and the cathode active layer adheres stably on the current collector, therefore, make the secondary battery, the battery module, the battery pack, and the electric device containing the same are advantageous in excellent high-temperature stability and excellent cycle performance.

BRIEF DESCRIPTION OF THE DRAWINGS

In order to more clearly illustrate the technical solutions of embodiments of the present application, the accompanying drawings that need to be used in the embodiments of the present application will be briefly introduced below. Obviously, the accompanying drawings described below are only some embodiments of the present application, those of ordinary skill in the art can also obtain other drawings based on the accompanying drawings without paying creative efforts.

FIG. 1 is a side view of a cathode plate according to an embodiment of the present application;

FIG. 2 is a schematic diagram of a secondary battery according to an embodiment of the present application;

FIG. 3 is an exploded view of the secondary battery shown in FIG. 2 according to an embodiment of the present application;

FIG. 4 is a schematic diagram of a battery module according to an embodiment of the present application;

FIG. 5 is a schematic diagram of a battery pack according to an embodiment of the present application;

FIG. 6 is an exploded view of the battery pack shown in FIG. 5 according to an embodiment of the present application; and

FIG. 7 is a schematic diagram of an electric device in which a secondary battery is used as a power source according to an embodiment of the present application.

Reference numeral explanations:

11: Current collector; 12: Conductive coating; 13: Cathode active layer; 1: Battery pack; 2: Upper casing; 3: Lower casing; 4: Battery module; 5: Secondary battery; 51: Housing; 52: Electrode assembly; and 53: Top cover assembly.
In the accompanying drawings, the accompanying drawings are not drawn to actual scale.

DETAILED DESCRIPTION

Implementation manners of the present application will be further described in detail below with reference to the drawings and embodiments. The detailed description and drawings of the following embodiments are used to illustrate the principles of the application, but not to limit the scope of the application, that is, the application is not limited to the described embodiments.
Hereinafter, embodiments of a cathode plate, a secondary battery, a battery module, a battery pack, and an electric device of the present application will be specifically disclosed in detail with reference to the accompanying drawings. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following descriptions are provided for those skilled in the art to fully understand the present application, and are not intended to limit the subject matter described in the claims.
A "range" disclosed herein is defined in terms of a lower limit and an upper limit, and a given range is defined by selecting the lower limit and the upper limit that define a boundary of the particular range. The range defined in this manner may be inclusive or exclusive and may be combined arbitrarily, that is, any lower limit may be combined with any upper limit to form a range. For example, if ranges of 60-120 and 80-110 are listed for a particular parameter, it is understood that ranges of 60-110 and 80-120 are contemplated. Additionally, if minimum range values of 1 and 2 and maximum range values of 3, 4, and 5 are listed, the following ranges are all contemplated: 1-3, 1-4, 1-5, 2-3, 2-4 and 2-5. In the present application, unless otherwise specified, the numerical range "a-b" represents an abbreviated representation of any combination of real numbers between an and b, where an and b are both real numbers. For example, the numerical range "0-5" indicates that all real numbers between "0-5" have been listed in the present application, and "0-5" is only an abbreviated representation of the combination of these values. In addition, when expressing that a certain parameter is an integer $\geq 2$, it is equivalent to the disclosure that the parameter is an integer such as 2, 3, 4, 5, 6, 7, 8, 9, 10, 11, 12, and so on.
Unless otherwise specified, all the implementation modes and optional implementation modes of the present application can be combined with each other to form new technical solutions.
Unless otherwise specified, all the technical features and optional technical features of the present application can be combined with each other to form a new technical solution.
Unless otherwise specified, all steps in the present application can be performed sequentially or randomly, preferably sequentially. For example, the method includes steps (a) and (b), which means that the method may include steps (a) and (b) performed in sequence, and may further include steps (b) and (a) performed in sequence. For example, when mentioning that the method may further include step (c), it means that step (c) may be added to the method in any order, for example, the method may include steps (a), (b), and (c), may also include steps (a), (c), and (b), may also include steps (c), (a), and (b), and so on.
Unless otherwise specified, the "comprising" and "including" mentioned in the present application mean open or closed. For example, the "comprising" and "including" may mean that other components not listed may be included or included, or only listed components may be included or included.

In the present application, the term "or" is inclusive unless otherwise specified. For example, the phrase "A or B" means "A, B, or both An and B". More specifically, any one of the following condition satisfy "A or B": A is true (or exists) and B is false (or does not exist); A is false (or does not exist) and B is true (or exists); or both An and B are true (or exist).

The safety performance of lithium-ion battery is a minimum guarantee, and it is researcher's relentless pursuit to improve the safety of the lithium-ion battery. With regard to the electrolyte, the lithium fluorine-containing sulfonimide has relatively high thermal decomposition temperature, is insensitive to water, and can improve the safety performance of the battery to a certain extent. However, when the electrolyte contains such lithium salt, a risk of corrosion in the aluminum foil may occur, which may result in breakage of the electrode plate, and seriously threaten the safety performance and service life of the secondary battery.

Specifically, the cathode base material is usually aluminum foil at present, and the surface of the aluminum foil placed in the air will be oxidized to form a uniform oxide film. During the cold pressing of the active material, the active material particles will be partially pressed into the aluminum foil, destroying the oxide film therein. When the electrolyte contains the lithium fluorine-containing sulfonimide salt, the lithium salt will be oxidized at the cathode, and the oxidation product will combine with aluminum, and the combined product will be further dissolved in the electrolyte, and corrosion pits will appear, which may result in breakage of the electrode plate, and seriously threatens the safety performance and service life of the secondary battery.

Patent application with a publication number CN 13851724 A discloses that a lithium fluorine-containing sulfonimide salt matches with a conductive coating, by the introduction of conductive coating, the contact resistance between the current collector and the active material is reduced, and the corrosion risk caused by the contact between the lithium fluorine-containing sulfonimide salt and the current collector can be reduced to a certain extent, which can not only improve the high-rate cycle performance of the electrochemical device and reduce the temperature rise of the electrochemical device, but also can slow down the corrosion effect of lithium fluorine-containing sulfonimide salt on the cathode current collector, thereby improving the long-term stability of the electrochemical device.

However, the conductive coating easily leads to the detachment of the cathode active material layer from the current collector, thereby affecting the cycle performance of the lithium-ion battery..

As previously described, the conductive coating can slow down the corrosion of lithium fluorine-containing sulfonimide salt on the cathode current collector, and promote the long-term stability of the electrochemical device; however, in practical applications, the conductive coating easily leads to the detachment of the cathode active material layer from the current collector, thereby affecting the cycle performance of the lithium-ion battery. In order to solve this problem, the present application provides a cathode plate, a secondary battery, a battery module, a battery pack, and an electric device.

[Cathode plate]

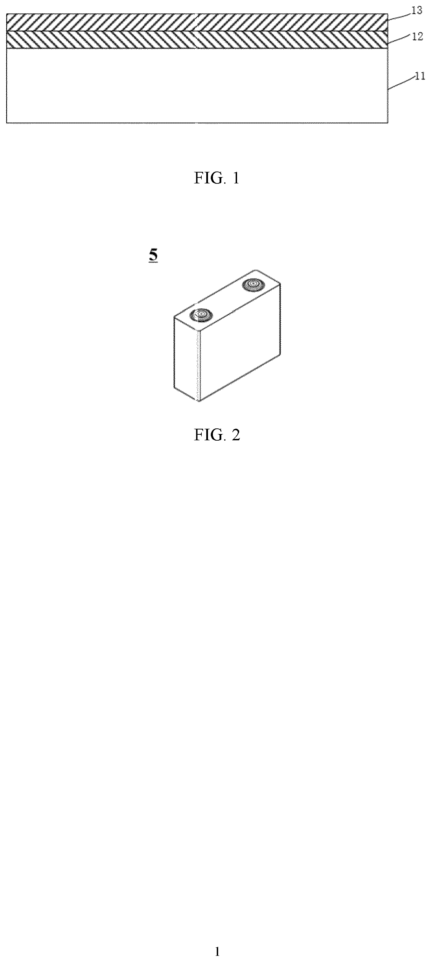

A first aspect of the present application provides a cathode plate, as shown in FIG. 1, the cathode plate comprises: a current collector 11, a conductive coating 12, and a cathode active layer 13. The conductive coating 12 is arranged on at least one surface of the current collector 11, the conductive coating 12 comprises a conductive agent having a weight content of 20% to 50% and a binder having a weight content of 50% to 80%. The cathode active layer 13 is arranged on a surface of the conductive coating 12 away from the current collector 11, and a cathode active material in the cathode active layer 13 is at least one of a lithium manganate-based cathode material, a ternary cathode material, a quaternary cathode material.

In the present application, lithium manganate-based cathode material refers to doped or undoped $LiMn_2O_4$ cathode material having a spinel structure. The ternary cathode material refers to a lithium transition metal oxide having a layered structure and at least three elements of Ni, Co, Mn or Ni, Co, and Al at transition metal sites. The quaternary cathode material refers to a lithium transition metal oxide having a layered structure and at least four elements of Ni, Co, Mn, and Al at the transition metal sites.

The conductive coating 12 of the cathode plate of the present application alleviates the damage of the cathode active particles to the oxide layer on the surface of the aluminum foil during the cold pressing process, and improves a tensile strength of the electrode plate, it is effectively avoided the problem of the electrode plate breakage caused by oxidation. In addition, on the basis of using the conductive agent to conduct electron conduction between the current collector and the cathode active material, by controlling the amounts of the conductive agent and the binder, not only is the stability of electronic conduction between the current collector and the cathode active material ensured, but also the peel strength between the current collector 11and the conductive coating 12 is enhanced, thereby effectively solving the problem of the stripping of the cathode active layer 13, and meanwhile, the cycle performance and cycle stability of the secondary battery containing such cathode plate are effectively improved.

The weight content of the conductive agent and the weight content of the binder in the conductive coating can be any value in the above range, such as the weight content of the conductive agent can be 20%, 25%, 30%, 35%, 40%, 45% or 50%; and the weight content of the binder can be 50%, 55%, 60%, 65%, 70%, 75% or 80%.

As previously mentioned, the conductive coating of the present application should not only provide sufficient electrical conductivity, but also must satisfy the need to enhance the bonding ability to the cathode active layer. On such basis, on the basis of adjusting the ratio of the conductive agent and the binder, it is found that when the volume resistivity of the binder has a significant difference, the ratio of the conductive agent and the binder can be further adjusted to realize the further improvement of the conductivity and the bonding ability.

In any embodiment of the first aspect, the binder is a conductive binder, and the conductive binder has a volume resistivity of $\leq 10^{-3}$ $\Omega$•cm. Optionally, the conductive coating comprises a conductive agent having a weight content of 20% to 30% and a conductive binder having a weight content of 70% to 80%. In the above embodiment, the conductive binder is used as the binder, on the basis of ensuring the same electronic conductivity, the amount of the conductive agent can be further reduced, and the amount of the binder can be relatively increased, so as to further improve a peel strength between the current collector and the conductive coating

The conductive binder of the present application can be selected from the binder having conductive properties commonly used in the prior art, considering that the better the dispersibility of conductive agent in the binder, the stronger electrical conductivity of the binder. Therefore, in order to ensure that the conductive function of the conductive agent is fully played, in some embodiments, the conductive binder is any one or more selected from the group consisting of an epoxy resin conductive adhesive, a silicone resin conductive adhesive, a polyimide resin conductive adhesive, a phenolic resin conductive adhesive, and a polyurethane conductive adhesive. All the above conductive binders have stable chemical stability and relatively higher thermal stability, as well as relatively high dispersiblity to the inorganic conductive agent, thus ensuring the uniform dispersion of the conductive agent and satisfying the long-period use of the secondary battery with high-performance cycle.

In some embodiments, the binder is an insulating binder, and the conductive binder has a volume resistivity of $\geq 10^{10}$ $\Omega$•cm. Optionally, the conductive coating comprises a conductive agent having a weight content of 30% to 45% and an insulating binder having a weight content of 55% to 70%. In this embodiment, the volume resistivity of the adopted binder is relatively high, so the conductive agent required therein increases correspondingly, and the above weight content ensures simultaneous optimization of the electronic conduction effect and bonding effect of the conductive coating.

When the volume resistivity of the binder is higher, except increasing the content of the conductive agent, in some embodiments, further optionally, the insulating binder is any one or more selected from the group consisting of PVDF, a polyacrylonitrile, a styrene butadiene rubber, a polyvinyl alcohol, a gum arabic, a xanthan gum, and a polyacrylate. The above binders have relatively high bonding strength, good compatibility with the conductive agent, and ideal chemical stability and thermal stability, so that it is ensured that the conductive effect of the conductive agent dispersed therein can be fully exerted.

The conductive agent of the present application can be selected from the conventional conductive agent of secondary battery. In some embodiments, the conductive agent comprises any one or more selected from the group consisting of an acetylene black (AB), a carbon fiber, a conductive carbon black, a conductive graphite, a single-walled carbon nanotube, a multi-walled carbon nanotube, a graphene nanosheet, a graphene oxide nanosheet, and a micropowdered graphite. All the above conductive agents are conductive agents having high conductivity commonly used in the field, which ensures good conductivity of the conductive coating, on the basis of the above content.

In some embodiments, the conductive coating having a thickness of 0.5 $\mu$m to 5 $\mu$m. The thickness of the conductive coating can be in the range of any two of the following values: 0.5 $\mu$m, 0.8 $\mu$m, 1.0 $\mu$m, 1.5 $\mu$m, 1.8 $\mu$m, 2.0 $\mu$m, 2.2 $\mu$m, 2.5 $\mu$m, 3.0 $\mu$m, 3.5 $\mu$m, 4.0 $\mu$m, 4.5 $\mu$m, or 5.0 $\mu$m. Optionally, the conductive coating has a thickness of 0.8 $\mu$m to 3 $\mu$m. The conductive coating within the above thickness range, on the basis facilitating the effective bonding between the conductive coating and the current collector, can not only effectively alleviate the damage of the cathode active particles to the oxide layer on the surface of the aluminum foil during the cold pressing process, but also construct an effective electron conduction channel and ensure that a secondary battery containing the cathode plate has a sufficiently high volumetric energy density. In some embodiments, the corresponding binder is a conductive binder, and the conductive binder has a volume resistivity of $\leq 10^{-3}$ $\Omega$•cm. Optionally, the conductive coating having a thickness of 2.2 $\mu$m to 3 $\mu$m; in some embodiments corresponding to the technical solution where the binder is an insulating binder, and the conductive binder has a volume resistivity of $\geq 10^{10}$ $\Omega$•cm, the conductive coating optionally has a thickness of 1.2 $\mu$m to 1.8 $\mu$m.

As an example, the current collector has two opposite surfaces in its own thickness direction, and the conductive coating 12 and the cathode active layer 13 are sequentially disposed on any one or both of the two opposite surfaces of the cathode current collector.

In some embodiments, the current collector can be a metal foil or a composite current collector. For example, an aluminum foil can be used as the metal foil. The composite current collector may include a polymer substrate and a metal layer formed on at least one surface of the polymer substrate. The composite current collector can be formed by forming a metal material (aluminum, an aluminum alloy, nickel, a nickel alloy, titanium, a titanium alloy, silver, a silver alloy, and the like) on a polymer substrate (such as a substrate made of a polypropylene (PP), a poly(ethylene terephthalate) (PET), a polybutylene terephthalate (PBT), a polystyrene (PS), a polyethylene (PE), and the like). Further optionally, the current collector is an aluminum foil, and optionally, the thickness of the current collector is 8 $\mu$m to 20 $\mu$m (such as 8 $\mu$m, 9 $\mu$m, 10 $\mu$m, 12 $\mu$m, 14 $\mu$m, 16 $\mu$m, 18 $\mu$m or 20 $\mu$m). Optionally, the current collector has both a longitudinal tensile strength and a transverse tensile strength of $\geq$175 MPa, so as to provide better mechanical strength and better meet the long-term cycle use of secondary batteries.

The transverse tensile strength of current collector in the present application can adopt test method known in the art. As an example, the following method can be used for testing: an aluminum foil having a length of 50 mm, a width of 20 mm, and a thickness of 15 $\mu$m is taken as a sample to be tested. Two ends of the sample to be tested are fixed by a fixture on an Instron 3365 high iron tensile machine in a length direction or a width direction. Then the sample to be tested is pulled at a speed of 10 mm/min until it is broken to complete the test. According to the instrument's own software, the tensile value in a width direction F(N) can be obtained. The transverse tensile strength can be calculated by R = F/(width of the aluminum foil $\times$ thickness of the aluminum foil).

The cathode active material of the present application is at least one of a lithium manganate-based cathode material, a ternary cathode material, and a quaternary cathode material. In some embodiments, the cathode active material includes at least one of Formulas (I) to (III):

$$Li_{a1}Ni_{x1}Co_{y1}M1_{z1}M2_{1-x1-y1-z1}O_{2-b1} \qquad \text{Formula (I)}$$

$$Li_{a2}Mn_{2-y2}M3_{y2}O_{4-b2} \qquad \text{Formula (II)}$$

$$cLi_2MnO_3 \cdot (1-c)Lia_3M4_{x3}O_{2-b3} \qquad \text{Formula (III)}$$

In Formula (I), M1 is Mn and/or Al, M2 is any one or more selected from the group consisting of Mg, Cu, Zn, Al, Sn, B, Ga, Zr, Cr, Sr, V, and Ti, $0.8 \leq a1 < 1.2$, $0 \leq x1 < 1$, $0 \leq y1 \leq 1$, $0 \leq z1 \leq 1$, $x1 + y1 + z1 \leq 1$, $-0.2 \leq b1 \leq 0.2$. In Formula (II), $0.8 \leq a2 < 1.2$, $0.6 \leq y2 \leq 1$, $-0.2 \leq b2 \leq 0.2$, M3 is any one or more selected from the group consisting of Mg, Cu, Zn, Al, Sn, B, Ga, Zr, Cr, Sr, V, and Ti. In Formula (III), $0 < c < 1$, $0 < x3 < 1$, $0.8 < a3 < 1.2$, $-0.2 \leq b3 \leq 0.2$, M4 is any one selected from Ni, Co, and Mn, and any one or more selected from the group consisting of Mg, Cu, Zn, Al, Sn, B, Ga, Zr, Cr, Sr, V, and Ti. The cathode active materials are mainly selected from a lithium manganate-based cathode material, a ternary cathode material, and a quaternary cathode material, in which, the lithium manganate-based cathode material shown in Formula (II) is a doped lithium manganate-based cathode material. Therefore, on the basis of ensuring a high rate, the dissolution of manganese is relatively reduced to ensure a high cycle performance.

A second aspect of the present application provides a secondary battery, comprising: a cathode plate, an anode plate, an electrolyte, and a separator. The cathode plate is any cathode plate according to the first aspect.

The secondary battery, also known as a rechargeable battery or accumulator, refers to a battery that can be activated by charging the active materials and continue to be used after the battery is discharged.

Typically, a secondary battery includes: a cathode plate, an anode plate, a separator, and an electrolyte. During the charging and discharging process of the battery, active ions (such as lithium ions) are repeatedly intercalated and deintercalated between the cathode and the anode. The separator is arranged between the cathode plate and the anode plate, which mainly plays a role in preventing the short circuit of the cathode and the anode, as well as preventing the active ions from passing therethrough. The electrolyte is between the cathode plate and the anode plate, and mainly plays the role of conducting active ions.

Since the conductive coating of the cathode plate of the present application alleviates the damage of the cathode active particles to the oxide layer on the surface of the aluminum foil during the cold pressing process, and improves a tensile strength of the electrode plate, it is effectively avoided the problem of the electrode plate breakage caused by oxidation. In addition, by controlling the amounts of the conductive agent and the binder, not only is the stability of electronic conduction between the current collector and the cathode active material ensured, but also the peel strength between the current collector and the conductive coating is enhanced, thereby effectively solving the problem of the stripping of the cathode active layer, and meanwhile, the cycle performance and cycle stability of the secondary battery containing such cathode plate are effectively improved.

In some embodiments of the second aspect, the electrolyte comprises a lithium salt. The lithium salt comprises a lithium fluorine-containing sulfonimide and a lithium hexafluorophosphate. Optionally, and the lithium salt is any one or more selected from the group consisting of lithium bisfluorosulfonyl imide, lithium bis(trifluoromethyl)fluorosulfonyl imide, lithium (fluorosulfonyl)(trifluoromethylsulfonyl)imide, lithium (fluorosulfonyl)(pentafluoroethylsulfonyl)imide, lithium (trifluoromethylsulfonyl)(difluoromethylsulfonyl)imide, lithium (fluorosulfonyl) (perfluorobutylsulfonyl) imide, and lithium bis (pentafluoroethylsulfonyl) imide. During the first charge and discharge process, lithium hexafluorophosphate ($LiPF_6$) is oxidized and decomposed at the anode, and the oxidation product aluminum trifluoride is deposited on the surface of the current collector, which alleviates the corrosion of aluminum foil by lithium fluorine-containing sulfonimide to a certain extent. Lithium fluorine-containing sulfonimidehas a high degree of dissociation in the non-aqueous organic solvent, the conductivity of the electrolyte is high, and such lithium salt has good thermal stability, and has fewer side reactions at high temperatures, so that the secondary battery containing the electrolyte of such lithium salt has better high-temperature cycle performance.

In any embodiment of the second aspect, optionally, the lithium salt in the electrolyte has a total concentration of 0.6 mol/L to 2 mol/L (such as 0.6 mol/L, 0.7 mol/L, 0.8 mol /L, 1.0 mol/L, 1.2 mol/L, 1.5 mol/L, 1.8 mol/L, or 2.0 mol/L). Optionally, in the electrolyte, the lithium hexafluorophosphate has a concentration C1 of 0.1 mol/L to 1 mol/L (such as 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, or 1 mol/L), the lithium fluorine-containing sulfonimide has a concentration C2 of 0.5 mol/L to 1.5 mol/L (for example, 0.5 mol/L, 0.7 mol/L, 0.8 mol/L, 1.0 mol/L, 1.2 mol/L, 1.4 mol/L, or 1.5 mol/L), further optionally, $1 \leq C2/C1 \leq 5$ (such as 1, 1.5, 2, 2.5, 3, 3.5, 4, 4.5, or 5). Within the above concentration range, the fluorine-containing lithium sulfonylimide can fully improve the conductivity of the electrolyte. By further controlling the concentration ratio of C2 to C1 within the above range, on the one hand, the lithium fluorine-containing sulfonimide can be used to improve the conductivity of the electrolyte, on the other hand, lithium hexafluorophosphate can be oxidized on the cathode current collector during the first charge and discharge to form an aluminum trifluoride thin film, together with the conductive coating, can alleviate the corrosion effect of the fluorine-containing sulfonimide lithium on the current collector, thereby further improving the high-temperature cycle performance of the secondary battery.

In any embodiment of the second aspect, a thickness d of the conductive coating of the cathode plate, the concentration C1 of the lithium hexafluorophosphate and the concentration C2 of the lithium fluorine-containing sulfonimide satisfy the following relational expression: $C2/(5 \times C1) \leq d \leq lg(C2/C1) + 4$, in which, a unit of C1 and C2 is mol/L, and a unit of d is $\mu$m. Based on the control of the thickness of the conductive coating, the concentration of lithium hexafluorophosphate, and the concentration of lithium fluorine-containing sulfonimide according to the above relational formula, under a joint action of the three parameters, the high-temperature cycle performance, energy density and corrosion resistance of the secondary battery are better improved.

In any embodiment of the second aspect, the electrolyte further comprises an organic solvent and an additive; and the organic solvent is any one or more selected from the group consisting of dimethyl carbonate, diethyl carbonate, dipropyl carbonate, ethyl methyl carbonate, methyl propyl carbonate, vinyl carbonate, propylene carbonate, vinyl carbonate, propylene carbonate, butylene carbonate, ethyl propyl carbonate, $\gamma$-butyrolactone, methyl formate, ethyl acetate, propyl acetate, methyl propionate, ethyl propionate, methyl propionate, and tetrahydrofuran. The above organic solvents are all common organic solvents in this field, and the dispersion performance of lithium salts in such organic solvents is relatively good.

In any embodiment of the second aspect, e organic solvent in the electrolyte has a weight content of 65% to 85%. Typically but not limiting, the above weight content is 65%, 70%, 75%, 80%, or 85%.

In any embodiment of the second aspect, the additive is at least one selected from the group consisting of vinylene carbonate, vinyl sulfate, lithium difluorooxalate borate, lithium difluorophosphate, lithium tetrafluoroborate, 1,3-propane sultone, lithium trifluoromethanesulfonate, and lithium diacetate borate. Those skilled in the art can choose to add the above additives according to the specific performance requirements of the secondary battery. For example, the 1,3-propane sultone can be oxidized at the cathode in advance to alleviate the oxidation of lithium fluorine-containing sulfonimide under high voltage for gas generation, and thus better alleviating the corrosion of the current collector by the lithium fluorine-containing sulfonylimide.

In any embodiment of the second aspect, the additive in the electrolyte has a total weight content of 0.5% to 7% (such as 0.5%, 1%, 2%, 3%, 4%, 5%, 6%, or 7%), so as to fully play the function of the corresponding additive, without affecting the effect of the above lithium salt.

[Anode plate]

In the secondary battery of the present application, the anode plate can comprise: an anode current collector, and an anode material layer which is arranged on the anode current collector and comprises an anode active material. The anode material layer can be arranged on one surface of the anode current collector, and can also be arranged on two surfaces of the anode current collector.

In some embodiments, the anode current collector can adopt a metal foil or a composite current collector. For example, a copper foil can be used as the metal foil. The composite current collector may include a polymer substrate and a metal layer formed on at least one surface of the polymer substrate. The composite current collectors can be formed by forming a metal material (copper, a copper alloy, nickel, a nickel alloy, titanium, a titanium alloy, silver, a silver alloy, and the like) on the polymer substrate (such as a substrate made of a polypropylene (PP), a poly(ethylene terephthalate) (PET), a polybutylene terephthalate (PBT), a polystyrene (PS), a polyethylene (PE), and the like).

In some embodiments, the anode active material can be an anode active material known in the art of batteries. As an example, the anode active material may include at least one of the following materials: graphite (such as artificial graphite, natural graphite), soft carbon, hard carbon, mesocarbon microspheres, carbon fibers, carbon nanotubes, silicon-based materials, tin-based materials, lithium titanate, and the like. The silicon-based materials may be at least one selected from elemental silicon, a silicon-oxygen compound, a silicon-carbon composite, a silicon-nitrogen composite, and a silicon alloy. The tin-based material can be at least one selected from of elemental tin, a tin oxide, and a tin alloy. However, the present application is not limited to these materials, and other conventional materials suitable for the anode active materials of the batteries can also be used. These anode active materials may be used alone or in combination of two or more.

In some embodiments of the second aspect, an anode active material of the anode sheet comprises any one or more selected from the group consisting of a natural graphite, an artificial graphite, a mesophase micro carbon, a hard carbon, a soft carbon, silicon, a silicon-carbon composite, a Li-Sn alloy, a Li-Sn-O alloy, Sn, SnO, $SnO_2$, a lithiated $TiO_2$-$Li_4Ti_5O_{12}$ in a spinel structure, and a Li-Al alloy.

In some embodiments, the anode film layer may further optionally include a binder. As an example, the binder may be at least one selected from a styrene-butadiene rubber (SBR), a polyacrylic acid (PAA), a sodium polyacrylate (PAAS), a polyacrylamide (PAM), a polyvinyl alcohol (PVA), a sodium alginate (SA), a polymethacrylic acid (PMAA), and a carcaseymethyl chitosan (CMCS).

In some embodiments, the anode film layer may also optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the anode material layer comprises: an artificial graphite as an anode active material, and acetylene black and binder styrene butadiene rubber (SBR) as a conductive agent.

In some embodiments, the anode film layer may optionally include other additives, such as a thickener (such as, a sodium carcaseymethylcellulose (CMC-Na)) and the like.

In some embodiments, the anode plate can be prepared as follows: dispersing the components for preparing the anode plate, such as the anode active material, the conductive agent, the binder, and any other components, in a solvent (such as a deionized water) to form an anode slurry; coating the anode slurry on the anode current collector, and performing drying, cold pressing, and other processes, to obtain the anode plate.

[Separator]

In the secondary battery of the present application, the separator is arranged between the cathode plate and the anode plate, and plays a role of isolation. The type of the separator is not particularly limited, and any known separator in a porous structure having good chemical stability and mechanical stability can be selected. In some embodiments, the material for the separator can be at least one selected from a glass fiber, a non-woven fabric, a polyethylene, a polypropylene, and a polyvinylidene fluoride. The separator can be a single-layer film or a multi-layer composite film, which is not particularly limited herein. When the separator is a multilayer composite film, the materials of each layer may be the same or different, which is not particularly limited herein.

The secondary battery of the present application may be a lithium-ion battery.

A conventional method can be used to prepare the secondary battery of the present application. In some embodiments, the cathode plate, the anode plate, and the separator can be made into an electrode assembly through a winding process or a lamination process. An exemplary preparation method include the following steps:

in Step 1: a cathode plate, a separator, and an anode plate are stacked in order to enable the separator to be arranged between the cathode plate and the anode plate, and then a resulting combination is wound to obtain an electrode assembly; and

in Step 2: the electrode assembly is placed in a secondary battery housing and dried, then an electrolyte is injected, and then formation process and standing process are performed to obtain a secondary battery.

In some embodiments, the secondary battery may include an outer package. The outer package can be used to package the electrode assembly and the electrolyte.

In some embodiments, the outer packaging of the secondary battery may be a hard case, such as a hard plastic case, aluminum case, steel case, and the like. The outer packaging of the secondary battery may also be a soft case, such as a bag-type soft case. The material of the soft case may be plastic, and examples of the plastic include a polypropylene, a polybutylene terephthalate, a polybutylene succinate, and the like

The present application has no special limitation on the shape of the secondary battery, which may be cylindrical, square, or any other shape. For example, FIG. 2 shows a square-shaped secondary battery 5 as an example.

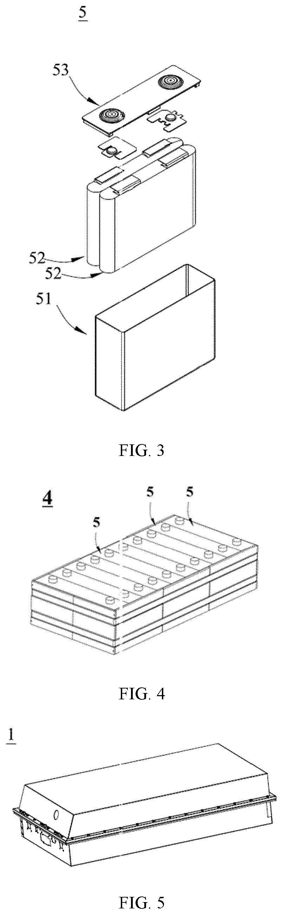

In some embodiments, referring to FIG. 3, the outer package may include a housing 51 and a cover 53. The housing 51 may include a bottom plate and side plates connected to the bottom plate, and the bottom plate and the side plates enclose to form an accommodating cavity. The housing 51 has an opening communicating with the accommodating cavity, and the cover plate 53 can cover the opening to enclose the accommodating cavity. The cathode plate, the anode plate, and the separator can be formed into an electrode assembly 52 through a winding process or a lamination process. The electrode assembly 52 is packaged in the accommodating cavity. Electrolyte is infiltrated in the electrode assembly 52. The number of electrode assemblies 52 contained in the secondary battery 5 can be one or more, which may be selected by those skilled in the art according to specific actual needs.

In some embodiments, the secondary battery can be assembled into a battery module, and the number of secondary batteries contained in the battery module can be one or more, and the specific number can be selected by those skilled in the art according to the application and capacity of the battery module.

FIG. 4 is a battery module 4 as an example. Referring to FIG. 4, in the battery module 4, a plurality of secondary batteries 5 may be arranged in sequence along a length direction of the battery module 4. It can be understood any other arrangement manners can also be adopted. Furthermore, the plurality of secondary batteries 5 may be fixed by fasteners.

Optionally, the battery module 4 may further include a case having an accommodation space, in which a plurality of secondary batteries 5 are accommodated.

In some embodiments, the battery modules can also be assembled into a battery pack, and the number of battery modules contained in the battery pack can be one or more, and the specific number can be selected by those skilled in the art according to the application and capacity of the battery pack.

FIGS. 5-6 show a battery pack 1 as an example. Referring to FIGS. 5- 6, the battery pack 1 may include a battery case and a plurality of battery modules 4 disposed in the battery case. The battery case includes an upper case 2 and a lower case 3, the upper case 2 can cover the lower case 3 and form an enclosed space for accommodating the battery modules 4. The plurality of battery modules 4 can be arranged in the battery case in any manner.

In addition, the present application also provides an electrical device, which includes at least one of the secondary battery, the battery module, or the battery pack provided in the present application. The secondary battery, the battery module, or the battery pack can be used as a power source of the electrical device, and can also be used as an energy storage unit of the electrical device. The electrical devices may include mobile devices (such as mobile phones, laptops, and the like), electric vehicles (such as pure electric vehicles, hybrid electric vehicles, plug-in hybrid electric vehicles, electric bicycles, electric scooters, electric golf carts, and the like), electric trucks, and the like), electric trains, ships and satellites, energy storage systems, and the like, but not limited thereto. The secondary battery, the battery module, or the battery pack can be selected as the electrical device according to the use requirements.

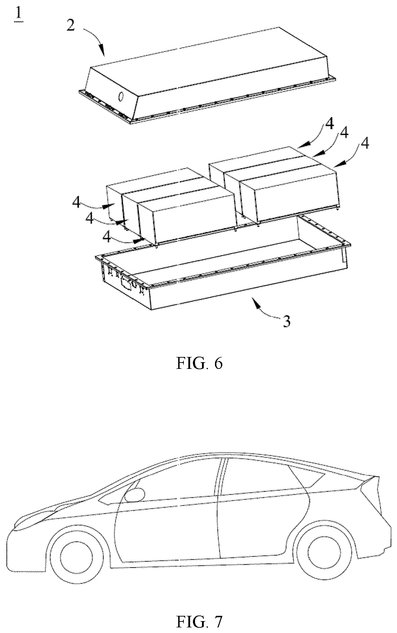

FIG. 7 is an example of an electrical device. The electrical device is a pure electric vehicle, a hybrid electric vehicle, or a plug-in hybrid electric vehicle. In order to meet the high power and high energy density requirements of the electrical device for the secondary battery, a battery pack, or a battery module may be used.

As another example, the device may be a mobile phone, a tablet computer, a notebook computer, or the like. The device is generally required to be light and thin, and a secondary battery can be used as a power source.

Because the cathode plate of the present application has corrosion resistance, cathode active layer adheres stable on current collector, therefore, make the secondary battery with it, battery module, battery pack and electric device have good high-temperature stability, Advantages of good cycle performance.

[Examples]

Hereinafter, examples of the present application will be described. The embodiments described below are exemplary and are only used for explaining the present application, and should not be construed as limiting the present application. If no specific technique or condition is indicated in the examples, it shall be carried out according to the technique or condition described in the literature in this field or according to the product specification. The reagents or instruments used, if not indicated by the manufacturer, are all commercially available conventional products.

The following table 1 illustrates the source, performance of some materials used in examples. Examples 8, 9, 17-19 are Reference Examples.

Table 1

| Name | Manufacture and model | Volume resistivity $(\Omega \cdot cm)$ |
|---|---|---|
| Epoxy resin conductive adhesive | Dongguan Pinheng Binder Industry Co., Ltd., PH8011 | $10^{-3} \sim 10^{-4}$ |
| Silicone resin conductive adhesive | Henkel Binder Co., Ltd., ICP4000 | $10^{-3} \sim 10^{-4}$ |
| Polyimide resin conductive adhesive | Shenzhen Dehuikang Technology Co., Ltd., CW229 | $10^{-3} \sim 10^{-4}$ |
| Phenolic resin conductive adhesive | Bennuo company, DAD-3 | $10^{-3} \sim 10^{-4}$ |

(continued)

| Name | Manufacture and model | Volume resistivity ($\Omega \cdot cm$) |
|---|---|---|
| Polyurethane conductive adhesive | Shanghai Yechuan Chemical Co., Ltd., DU294B | $10^{-3}$-$10^{-4}$ |
| PVDF | Shanghai Sanaifu PVDF, FR915 | $5 \times 10^{14}$ |
| Polyacrylonitrile | McLean's reagent, P823208 | $6.5 \times 10^{13}$ |
| Gum arabic | McLean's reagent, P823208 | $3 \times 10^{12}$ |
| carbon fiber | Tianjin Jinglin New Material Technology Co., Ltd., ECC-N | 0.001 |
| multi-walled carbon nanotube | Pioneer Nano, 100238 | 0.002 |
| graphene nanosheet | Zhongke Yannuo, C03041 | $4 \times 10^{-4}$ |
| conductive carbon black | Tianjin Youmeng Technology Co., Ltd., Super P | 0.001 |

(1) Preparation of electrolyte

In a glove case full of argon (water content < 10 ppm, oxygen content < 1 ppm), 2% vinylene carbonate was added in an organic solvent (EC : EMC = 3 : 7 wt%/wt% ), after mixing evenly, an appropriate amount of a lithium salt was slowly added to a non-aqueous organic solvent (specific contents of $LiPF_6$ and the lithium fluorine-containing sulfonimide can be referred to in the following tables), and after the lithium salt was completely dissolved, a target electrolyte was obtained, which was the electrolyte.

Ratios of the solvent to the additive that were used in the Examples and the Comparative Examples are shown in Table 2, and in table 2, the ratio of the solvent to the additive is a weight percent calculated based on a total weight of electrolyte. In addition, in the electrolytes of the Examples and the Comparative Example, unless otherwise specified, the solvents were all vinyl carbonate: ethyl methyl carbonate (3 : 7 wt%/wt%), the additives were all vinylene carbonate, and the weight content of the additive was 2%.

Table 2

| | Cathode active material | Lithium salt 1 | | Lithium salt 2 | |
| | | Type | Concentration mol/L | Type | Concentration mol/L |
|---|---|---|---|---|---|
| Example 1 | $Li[Ni_{0.8}Co_{0.1}Mn_{0.1}]O_2$ | $LiPF_6$ | 0.1 | Lithium bisfluorosulfonyl imide | 0.5 |
| Example 2 | $Li[Ni_{0.8}Co_{0.1}Mn_{0.1}]O_2$ | $LiPF_6$ | 0.5 | Lithium bisfluorosulfonyl imide | 0.5 |
| Example 3 | $Li[Ni_{0.8}Co_{0.1}Mn_{0.1}]$ | $LiPF_6$ | 1 | Lithium bisfluorosulfonyl imide | 1.5 |
| Example 4 | $Li[Ni_{0.8}Co_{0.1}Mn_{0.1}]O_2$ | $LiPF_6$ | 0.1 | Lithium bis(trifluoromethyl)fluorosulfonyl imide | 0.5 |
| Example 5 | $Li[Ni_{0.5}Co_{0.2}Mn_{0.3}]O_2$ | $LiPF_6$ | 0.3 | Lithium bis(trifluoromethyl)fluorosulfonyl imide | 1.2 |

(2) Preparation of cathode plate (with primer):

First, an aqueous solution containing a conductive agent and a binder was coated on an aluminum foil substrate (which was an aluminum foil having a thickness of 15 $\mu$m and a transverse tensile strength of 180 MPa), then dried in an oven at a temperature of 85°C, so as to form a corresponding conductive coating on the aluminum foil substrate, and preserved for use. The composition for the electrolyte in Examples 6 to 33 and Comparative Examples 1 to 5 in Table 3 were consistent with those in Example 3.

The compositions of the conducting coatings in the Examples and the Comparative Example are listed in Table 3.

Table 3

| Number | Binder | Amount wt% | Conductive agent | Amount wt% | Thickness of conductive coating μm |
|---|---|---|---|---|---|
| Example 1-5 | Epoxy resin conductive adhesive | 80 | Carbon fiber | 20 | 2.5 |
| Example 6 | | 75 | | 25 | |
| Example 7 | | 70 | | 30 | |
| Example 8 | | 60 | | 40 | |
| Example 9 | | 50 | | 50 | |
| Example 10 | Silicone resin conductive adhesive | 75 | Carbon fiber | 25 | |
| Example 11 | Polyimide resin conductive adhesive | | | | |
| Example 12 | Phenolic resin conductive adhesive | | | | |
| Example 13 | Polyurethane conductive adhesive | | | | |
| Example 14 | PVDF | 70 | Carbon fiber | 30 | |
| Example 15 | | 65 | | 35 | |
| Example 16 | | 55 | | 45 | |
| Example 17 | | 45 | | 55 | |
| Example 18 | | 75 | | 25 | |
| Example 19 | | 50 | | 50 | |
| Example 20 | Polyacrylonitrile | 60 | | 40 | |
| Example 21 | Gum arabic | | | | |
| Example 22 | Epoxy resin conductive adhesive | 75 | Multi-walled carbon nanotube | 25 | |
| Example 23 | | | Graphene nanosheet | 25 | |
| Example 24 | | | Conductive carbon black | 25 | |
| Example 25 | | | Carbon fiber | 25 | 2.2 |
| Example 26 | | | | | 3 |
| Example 27 | | | | | 5 |
| Example 28 | PVDF | 60 | Carbon fiber | 40 | 0.5 |
| Example 29 | | | | | 0.8 |
| Example 30 | | | | | 1.2 |
| Example 31 | | | | | 1.8 |
| Example 32 | | | | | 2 |
| Example 33 | | | | | 3 |
| Example 34 | Epoxy resin conductive adhesive | 75 | Carbon fiber | 25 | 2.5 |
| Example 35 | PVDF | 60 | Carbon fiber | 40 | 2.5 |

(continued)

| Number | Binder | Amount wt% | Conductive agent | Amount wt% | Thickness of conductive coating μm |
|---|---|---|---|---|---|
| Comparative Example 1 | / | / | / | / | / |
| Comparative Example 2 | Epoxy resin conductive adhesive | 85 | Carbon fiber | 15 | 2.5 |
| Comparative Example 3 | | 15 | | 85 | |
| Comparative Example 4 | PVDF | 85 | Carbon fiber | 15 | 2.5 |
| Comparative Example 5 | | 15 | | 85 | |

The cathode active material, the conductive agent Super P, and the binder polyvinylidene fluoride (PVDF) were mixed in N-methylpyrrolidone (NMP) to prepare a cathode slurry. A solid content in the cathode slurry was 50 wt%, and a weight ratio of the cathode active material, the Super P, and the PVDF in the solid component was 8:1:1. The cathode slurry was coated on the current collector aluminum foil after a primer coating process, dried at 85°C. A resulting product was cold pressed, edge trimmed, cut into pieces, and divided into strips, and then the strips were dried under vacuum at 85°C for 4 hrs, so as to obtain a cathode plate. The cathode active materials in Examples 1 to 33 were $Li[Ni_{0.8}Co_{0.1}Mn_{0.1}]O_2$, the cathode active material of Example 34 was $Li[Ni_{0.5}Co_{0.2}Mn_{0.3}]O_2$, and the cathode active material of Example 35 was $Li[Ni_{0.6}Co_{0.2}Mn_{0.2}]O_2$.

(2) Preparation of cathode plate (without primer):

The cathode active material, the conductive agent Super P, and the binder polyvinylidene fluoride (PVDF) were mixed in N-methylpyrrolidone (NMP) to prepare a cathode slurry. A solid content in the cathode slurry was 50 wt%, and a weight ratio of $LiNi_{0.8}Co_{0.1}Mn_{0.1}O_2$, the Super P, and the PVDF in the solid component was 8:1:1. The cathode slurry was coated on the current collector aluminum foil, dried at 85°C. A resulting product was cold pressed, edge trimmed, cut into pieces, and divided into strips, and then the strips were dried under vacuum at 85°C for 4 hrs, so as to obtain a cathode plate.

(3) preparation of negative plate:

Graphite as a cathode active material, Super P as a conductive agent, CMC as a thickener, and a polyvinylidene fluoride (PVDF) as a binder were mixed in deionized water to prepare an anode slurry. A solid content in the anode slurry was 30 wt%, and a weight ratio of graphite, the Super P, the CMC, and the binder styrene butadiene rubber (SBR) in the solid component was 80:15:3:2. The anode slurry was coated on the current collector copper foil (having a thickness of 8 μm) and dried at 85°C. A resulting product was cold pressed, edge trimmed, cut into pieces, and divided into strips, and then dried at 120°C under vacuum for 12 hrs, so as to obtain an anode plate.

(4) Preparation of lithium-ion battery:

A polyethylene (PE) porous polymer film having a thickness of 16 μm was used as the separator. The prepared cathode plate prepared, separator, and the anode plate were sequentially stacked, so that the separator is arranged in the middle of the cathode and the anode to play the role of isolation, and a bare battery cell was obtained by winding, and tabs were soldered. The bare battery cell was placed in an outer package, the above electrolyte was injected into a dried housing, and then package, standing, formation, shaping, and capacity test were performed, so that the fabrication of the lithium-ion battery was completed (a soft-packed lithium-ion battery has a thickness of 4.0 mm, a width of 60 mm, and a length of 140 mm).

Test processes of the lithium-ion battery are described hereinbelow.

(1) Cycle performance test of lithium-ion battery

Lithium-ion battery was charged to a voltage of 4.2 V with a constant current of 1 C at 25°C, then charged to a current of 0.05 C with a constant voltage of 4.2 V, and then discharged to a voltage of 2.8 V with a constant current of 1C, which was defined as charge-discharge cycle. Taking the capacity of the first discharge as 100%, the capacity retention rate of the lithium-ion battery after 500 cycles was calculated. The capacity retention rate (%) of the lithium-ion battery after 500 cycles = the discharge capacity at a 500th cycle/the capacity of the first discharge × 100%.

(2) Thermal runaway performance test of lithium-ion battery

An ambient temperature was adjusted to 25°C, the lithium-ion battery was charged to a voltage of 4.2 V with 1C, then charged to a current of 0.05C with a constant voltage. The lithium-ion battery was placed into a heating furnace, the furnace was heated up at 10°C/min, the temperature was then preserved for 10 mins, until the thermal runaway of the lithium-ion battery occurred, then the process was terminated. The temperature monitored by the furnace when the thermal runaway occurred was recorded.

Transverse tensile strength test of electrode plates

As an example, the following method can be used for the test: the two ends of the cathode plate ( having a length of 50 mm and a width of 20 mm) after 500 cycles were fixed by a fixture on an Instron 3365 high iron tensile machine in a length direction or a width direction. Then the sample to be tested was pulled at a speed of 10 mm/min until it was broken to complete the test. According to the instrument's own software, the tensile value in a width direction F(N) was obtained. The transverse tensile strength was calculated by R = F/(width of the aluminum foil × thickness of the aluminum foil).

Peel strength test of electrode plate

As an example, the following method can be used for the test: one side of the cathode plate after 500 cycles was fixed on a steel plate (a double-sided binder tape can be used), and a membrane was gently torn to enable the membrane having a thickness of about 2 cm separated from the substrate. One end of the steel plate was fixed on the fixture of the tensile machine, and the separated membrane was then fixed on a clamp at an upper end of the tensile machine. The Instron 3365 high iron tensile machine was used to pull the membrane at a speed of 60 mm/min, a tension value displayed on the computer when the membrane was just peeled off from the substrate was the peel strength value of the membrane. When peeling off, the primer layer and the active material layer are peeled off from the substrate as a whole.

Resistance test of cathode plate

An initial cathode plate was put into a BER2100 multifunctional electrode plate resistance measuring instrument manufactured by Yuanneng Science and Technology, after 10 s in the upper and lower contact surfaces, data appeared on a computer display, then the test of a next position was performed, after 10 different positions were tested, an average value was taken.

(5) 45°C capacity retention test

The lithium-ion battery was charged to 4.2 V with a constant current of 1 C at 45°C, then charged to a current of 0.05 C with a constant voltage of 4.2 V, and then discharged to a voltage of 2.8 V with a constant current of 1 C, which is a charge-discharge cycle. Taking the capacity of the first discharge as 100%, the capacity retention rate of the lithium-ion battery after 200 cycles was calculated. The capacity retention rate (%) of the lithium-ion battery after 200 cycles = the discharge capacity at a 200th cycle/the capacity of the first discharge × 100%.

(6) Charging temperature rise test of lithium-ion battery

The lithium-ion battery was placed in a constant temperature box at 25°C and left to stand for 30 mins to allow the lithium-ion battery to reach a constant temperature. The lithium-ion battery that has reached the constant temperature was charged at a constant current of 1.0 C to a voltage of 4.2 V, and charged at a constant voltage of 4.2 V to a current of 0.05 C, then discharged to a voltage of 2.8 V with a constant current of 1.0 C. The charging process was monitored by a multi-channel thermometer, and the temperature of the battery surface raised. The test results are recorded in Table 4.

Table 4

| | Tensile strength (MPa) | Electrode peel strength (N/m) | Cathode plate resistance (Q) | 25°C Capacity Retention (%) | Thermal runaway temperature (°C) | 45°C Capacity Retention (%) | Temperature Rise (°C) |
|---|---|---|---|---|---|---|---|
| Example 1 | 191 | 9.8 | 0.25 | 95.30% | 145 | 92.90% | 2 |
| Example 2 | 188 | 9.8 | 0.26 | 95.50% | 146 | 93.10% | 2.1 |
| Example 3 | 190 | 9.8 | 0.34 | 95.20% | 151 | 93.20% | 1.9 |
| Example 4 | 200 | 9.8 | 0.25 | 95.40% | 150 | 93.30% | 2 |
| Example 5 | 199 | 9.8 | 0.26 | 95.10% | 146 | 93.00% | 2 |
| Example 6 | 197 | 9.4 | 0.24 | 95.00% | 154 | 92.60% | 2.4 |
| Example 7 | 194 | 9.1 | 0.22 | 94.80% | 156 | 92.40% | 2.2 |
| Example 8 | 190 | 8.3 | 0.16 | 94.00% | 142 | 91.70% | 1.8 |
| Example 9 | 186 | 7.3 | 0.14 | 93.60% | 140 | 91.40% | 1.5 |
| Example 10 | 196 | 9.2 | 0.24 | 95.20% | 155 | 92.50% | 2.4 |
| Example 11 | 197 | 9.6 | 0.25 | 95.10% | 155 | 92.50% | 2.4 |
| Example 12 | 195 | 9.4 | 0.24 | 95.00% | 154 | 92.40% | 2.5 |
| Example 13 | 196 | 9.5 | 0.23 | 94.90% | 155 | 92.60% | 2.3 |
| Example 14 | 193 | 9 | 0.26 | 94.50% | 153 | 92.40% | 3.1 |
| Example 15 | 195 | 8.6 | 0.24 | 94.10% | 157 | 92.00% | 2.9 |
| Example 16 | 192 | 7.8 | 0.21 | 94.20% | 155 | 92.60% | 2.7 |
| Example 17 | 186 | 7.2 | 0.18 | 93.20% | 141 | 89.10% | 2.4 |
| Example 18 | 188 | 9.6 | 0.28 | 93.40% | 147 | 91.60% | 2.9 |
| Example 19 | 190 | 7.5 | 0.2 | 93.60% | 152 | 89.30% | 2.6 |
| Example 20 | 193 | 8 | 0.23 | 94.00% | 156 | 92.80% | 2.7 |
| Example 21 | 194 | 8.2 | 0.22 | 94.10% | 155 | 92.70% | 2.8 |
| Example 22 | 195 | 9.4 | 0.27 | 95.00% | 157 | 93.10% | 2.5 |
| Example 23 | 197 | 9.5 | 0.16 | 95.50% | 156 | 93.30% | 1.8 |
| Example 24 | 196 | 9.4 | 0.24 | 95.10% | 155 | 92.80% | 2.4 |
| Example 25 | 195 | 9 | 0.34 | 94.50% | 153 | 92.30% | 2.4 |
| Example 26 | 198 | 9.8 | 0.25 | 95.40% | 162 | 93.80% | 2.3 |
| Example 27 | 180 | 10 | 0.4 | 93.20% | 141 | 87.90% | 4.7 |
| Example 28 | 182 | 6.5 | 0.24 | 93.00% | 148 | 91.40% | 2.7 |
| Example 29 | 183 | 6.8 | 0.23 | 93.20% | 149 | 91.50% | 2.9 |
| Example 30 | 195 | 7.3 | 0.22 | 94.30% | 158 | 93.00% | 2.6 |
| Example 31 | 196 | 7.5 | 0.24 | 94.50% | 160 | 93.20% | 2.5 |
| Example 32 | 194 | 7.8 | 0.24 | 94.00% | 155 | 92.70% | 2.8 |
| Example 33 | 192 | 8.5 | 0.23 | 93.90% | 151 | 92.00% | 2.7 |
| Example 34 | 195 | 9.5 | 0.23 | 95.20% | 155 | 92.20% | 2.4 |
| Example 35 | 194 | 8 | 0.23 | 94.20% | 156 | 92.70% | 2.8 |
| Comparative Example 1 | 175 | 6.4 | 0.66 | 83.20% | 95 | 72.00% | 6.5 |
| Comparative Example 2 | 179 | 10.4 | 0.47 | 85.30% | 107 | 77.60% | 6 |

(continued)

|  | Tensile strength (MPa) | Electrode peel strength (N/m) | Cathode plate resistance (Q) | 25°C Capacity Retention (%) | Thermal runaway temperature (°C) | 45°C Capacity Retention (%) | Temperature Rise (°C) |
|---|---|---|---|---|---|---|---|
| Comparative Example 3 | 177 | 6 | 0.59 | 86.40% | 121 | 79.30% | 6.2 |
| Comparative Example 4 | 173 | 9.6 | 0.92 | 85.00% | 118 | 74.30% | 6.4 |
| Comparative Example 5 | 170 | 5.2 | 0.63 | 86.10% | 119 | 78.40% | 6 |

It can be known from the test results of Table 4 that compared with the Comparative Examples 1-5, Examples 1 to 35 were tested to have improved comprehensive performance, which means that the compositions of the conductive coating of the present application can effectively ensure the balance of adhesion and conductivity. In Comparative Example 1 without the primer, the corrosion of aluminum foil by fluorine-containing lithium sulfonyl imide cannot be inhibited, and electrode plate breakage and internal short circuit may possibly occur during use, so both the cycle performance and the safety performance are the worst. Although the Comparative Examples 2 and 4 has the primer, the binder content in the primers is too high, which seriously affects the conductivity of the primers, resulting in increased electrode impedance, increased polarization of the secondary battery, and deterioration of the cycle performance and safety performance of the secondary battery. In Comparative Examples 3 and 5, the binder content is too small to effectively bond the separator. During the cycle, the adhesion of the electrode plate becomes poor, and the electrical contact between the current collector and the active material is poor, resulting in a huge contact resistance, so the overall performance of the secondary battery is relatively poor.

In addition, the result contrast of Example 27 and all the other examples shows that binder/conductive agent in the primer satisfies the above range, and the thickness of the primer satisfies $C2/(5 \times C1) \leq d \leq \lg(C2/C1) + 4$, a battery with better performance can be obtained.

While the application has been described with reference to preferred embodiments, various modifications may be made and equivalents may be substituted for parts thereof without departing from the scope of the application. In particular, as long as there is no structural conflict, the technical features mentioned in the various embodiments can be combined in any manner. The present application is not limited to the specific embodiments disclosed herein, but includes all technical solutions falling within the scope of the claims.

## Claims

1. A cathode plate, comprising:

a current collector;
a conductive coating, wherein the conductive coating is arranged on at least one surface of the current collector, the conductive coating comprises a conductive agent having a weight content of 20% to 50% and a binder having a weight content of 50% to 80%; and
a cathode active layer, wherein the cathode active layer is arranged on a surface of the conductive coating away from the current collector, and a cathode active material in the cathode active layer comprises at least one of Formulas (I) to (III):

$$Li_{a1}Ni_{x1}Co_{y1}M1_{z1}M2_{1-x1-y1-z1}O_{2-b1} \qquad \text{Formula (I)}$$

$$Li_{a2}Mn_{2-y2}M3_{y2}O_{4-b2} \qquad \text{Formula (II)}$$

$$cLi_2MnO_3 \cdot (1-c)Li_{a3}M4_{x3}O_{2-b3} \qquad \text{Formula (III)}$$

in Formula (I), M1 is Mn and/or Al, M2 is any one or more selected from the group consisting of Mg, Cu, Zn, Al, Sn, B, Ga, Zr, Cr, Sr, V, and Ti, $0.8 \leq a1 < 1.2$, $0 \leq x1 < 1$, $0 \leq y1 \leq 1$, $0 \leq z1 \leq 1$, $x1 + y1 + z1 \leq 1$, $-0.2 \leq b1 \leq 0.2$;
in Formula (II), $0.8 \leq a2 < 1.2$, $0.6 \leq y2 \leq 1$, $-0.2 \leq b2 \leq 0.2$, M3 is any one or more selected from the group consisting of Mg, Cu, Zn, Al, Sn, B, Ga, Zr, Cr, Sr, V, and Ti; and
in Formula (III), $0 < c < 1$, $0 < x3 < 1$, $0.8 < a3 < 1.2$, $-0.2 \leq b3 \leq 0.2$, M4 is any one selected from Ni, Co, and Mn, and any one or more selected from the group consisting of Mg, Cu, Zn, Al, Sn, B, Ga, Zr, Cr, Sr, V, and Ti;

characterize in that
the binder is one of: a conductive binder wherein the conductive binder has a volume resistivity of $\leq 10^{-3}$ $\Omega$•cm, and an insulating binder wherein the insulating binder has a volume resistivity of $\geq 10^{10}$ $\Omega$•cm;

when the binder is the conductive binder, the conductive coating comprises the conductive agent having a weight content of 20% to 30% and the conductive binder having a weight content of 70% to 80%;
when the binder is the insulating binder, the conductive coating comprises the conductive agent having a weight content of 30% to 45% and the insulating binder having a weight content of 55% to 70%.

2. The cathode plate according to claim 1, wherein the conductive binder is any one or more selected from the group consisting of an epoxy resin conductive adhesive, a silicone resin conductive adhesive, a polyimide resin conductive adhesive, a phenolic resin conductive adhesive, and a polyurethane conductive adhesive.

3. The cathode plate according to claim 1, wherein the insulating binder is any one or more selected from the group consisting of PVDF, a polyacrylonitrile, a styrene butadiene rubber, a polyvinyl alcohol, a gum arabic, a xanthan gum, and a polyacrylate.

4. The cathode plate according to any one of claims 1 to 3, wherein the conductive agent comprises any one or more selected from the group consisting of an acetylene black, a carbon fiber, a conductive carbon black, a conductive graphite, a single-walled carbon nanotube, a multi-walled carbon nanotube, a graphene nanosheet, a graphene oxide nanosheet, and a micropowdered graphite.

5. The cathode plate according to any one of claims 1 to 4, wherein the conductive coating having a thickness of 0.5 $\mu$m to 5 $\mu$m, optionally, the thickness of the conductive coating is 0.8 $\mu$m to 3 $\mu$m.

6. The cathode plate according to any one of claims 1 to 5, wherein the current collector is an aluminum foil, optionally, the aluminum foil has a thickness of 8 $\mu$m to 20 $\mu$m, and/or, the current collector has both a longitudinal tensile strength and a transverse tensile strength of $\geq 175$ Mpa.

7. A secondary battery, comprising the cathode plate according to any one of claims 1 to 6.

8. The secondary battery according to claim 7, wherein the secondary battery contains an electrolyte, the electrolyte comprises a lithium salt, and the lithium salt comprises a lithium fluorine-containing sulfonimide and lithium hexafluorophosphate;
optionally, the electrolyte also at least meets one of the following conditions:

(1) the lithium fluorine-containing sulfonimide is any one or more selected from the group consisting of lithium bisfluorosulfonyl imide, lithium bis(trifluoromethyl)fluorosulfonyl imide, lithium (fluorosulfonyl)(trifluoromethylsulfonyl)imide, lithium (fluorosulfonyl)(pentafluoroethylsulfonyl)imide, lithium (trifluoromethylsulfonyl)(difluoromethylsulfonyl)imide, lithium (fluorosulfonyl) (perfluorobutylsulfonyl) imide, and lithium bis (pentafluoroethylsulfonyl) imide;
(2) the lithium salt in the electrolyte has a total concentration of 0.6 mol/L to 2 mol/L;
(3) in the electrolyte, the lithium hexafluorophosphate has a concentration C1 of 0.1 mol/L to 1 mol/L, and the lithium fluorine-containing sulfonimide has a concentration C2 of 0.5 mol/L to 1.5 mol/L;
(4) in the electrolyte, the concentration C1 of the lithium hexafluorophosphate and the concentration C2 of the lithium fluorine-containing sulfonylimide satisfy: $1 \leq C2/C1 \leq 5$.

9. The secondary battery according to claim 8, wherein a thickness d of the conductive coating of the cathode plate, the concentration C1 of the lithium hexafluorophosphate and the concentration C2 of the lithium fluorine-containing sulfonimide satisfy the following relational expression:

$$C2/(5 \times C1) \leq d \leq \lg(C2/C1) + 4,$$

wherein, a unit of C1 and C2 is mol/L, and a unit of d is $\mu$m.

10. The secondary battery according to claim 8 or 9, wherein the electrolyte further comprises an organic solvent and an additive; and the organic solvent is any one or more selected from the group consisting of dimethyl carbonate, diethyl carbonate, dipropyl carbonate, ethyl methyl carbonate, methyl propyl carbonate, vinyl carbonate, propylene carbonate, vinyl carbonate, propylene carbonate, butylene carbonate, ethyl propyl carbonate, γ-butyrolactone, methyl formate, ethyl acetate, propyl acetate, methyl propionate, ethyl propionate, methyl propionate, and tetrahydrofuran; and/or,

the organic solvent in the electrolyte has a weight content of 65% to 85%; and/or,
the additive is at least one selected from the group consisting of vinylene carbonate, vinyl sulfate, lithium difluorooxalate borate, lithium difluorophosphate, lithium tetrafluoroborate, 1,3-propane sultone, lithium trifluoromethanesulfonate, and lithium diacetate borate; and/or,
the additive in the electrolyte has a total weight content of 0.5% to 7%.

11. The secondary battery according to claim 7, wherein an anode active material of the anode sheet comprises any one or more selected from the group consisting of a natural graphite, an artificial graphite, a mesophase micro carbon, a hard carbon, a soft carbon, silicon, a silicon-carbon composite, a Li-Sn alloy, a Li-Sn-O alloy, Sn, SnO, $SnO_2$, a lithiated $TiO_2$-$Li_4Ti_5O_{12}$ in a spinel structure, and a Li-Al alloy.

12. A battery module, comprising a secondary battery, wherein the secondary battery is the secondary battery according to any one of claims 7 to 11.

13. A battery pack, comprising a battery module, wherein the battery module is the battery module according to claim 12.

14. An electric device, comprising a secondary battery or a battery module or a battery pack, wherein the secondary battery is selected from the secondary battery according to any one of claims 7 to 11, the battery module is the battery module according to claim 12, or the battery pack is the battery pack according to claim 13.


**Patentansprüche**

1. Kathodenplatte umfassend:

einen Stromabnehmer;
eine leitfähige Beschichtung, wobei die leitfähige Beschichtung auf wenigstens einer Oberfläche des Stromabnehmers angeordnet ist, wobei die leitfähige Beschichtung ein leitfähiges Mittel in einem Gewichtsgehalt von 20 % bis 50 % und ein Bindemittel in einem Gewichtsgehalt von 50 % bis 80 % umfasst; und
eine Kathoden-Aktivschicht, wobei die Kathoden-Aktivschicht auf einer von dem Stromabnehmer abgewandten Oberfläche der leitfähigen Beschichtung angeordnet ist und ein Kathoden-Aktivmaterial in der Kathoden-Aktivschicht wenigstens eine der Formeln (I) bis (III) umfasst:

$$Li_{a1}Ni_{x1}Co_{y1}M1_{z1}M2_{1-x1y1z1}O_{2-b1} \qquad \text{Formel (I)}$$

$$Li_{a2}Mn_{2-y2}M3_{y2}O_{4-b2} \qquad \text{Formel (II)}$$

$$cLi_2MnO_3 \cdot (1-c)Li_{a3}M4_{x3}O_{2-b3} \qquad \text{Formel (III)}$$

wobei in Formel (I) M1 Mn und/oder Al ist, M2 eines oder mehrere ausgewählt aus der Gruppe bestehend aus Mg, Cu, Zn, Al, Sn, B, Ga, Zr, Cr, Sr, V und Ti ist, $0,8 \leq a1 < 1,2$, $0 \leq x1 < 1$, $0 \leq y1 \leq 1$, $0 \leq z1 \leq 1$, $x1 + y1 + z1 \leq 1$, $-0,2 \leq b1 \leq 0,2$,
in Formel (II) $0,8 \leq a2 < 1,2$, $0,6 < y2 \leq 1$, $-0,2 \leq b2 \leq 0,2$, M3 eines oder mehrere ausgewählt aus der Gruppe bestehend aus Mg, Cu, Zn, Al, Sn, B, Ga, Zr, Cr, Sr, V und Ti ist; und
in Formel (III) $0 < c < 1$, $0 < x3 < 1$, $0,8 < a3 < 1,2$, $-0,2 \leq b3 \leq 0,2$, M4 eines ausgewählt aus Ni, Co und Mn und eines oder mehrere ausgewählt aus der Gruppe bestehend aus Mg, Cu, Zn, Al, Sn, B, Ga, Zr, Cr, Sr, V und Ti ist;
**dadurch gekennzeichnet, dass**
das Bindemittel eines ist von: einem leitfähigen Bindemittel, wobei das leitfähige Bindemittel einen spezifischen Volumenwiderstand von $\leq 10^{-3}$ Ω•cm aufweist, und einem isolierenden Bindemittel, wobei das isolierende Bindemittel einen spezifischen Volumenwiderstand von $\geq 10^{10}$ Ω•cm aufweist;
wenn das Bindemittel das leitfähige Bindemittel ist, die leitfähige Beschichtung das leitfähige Mittel in einem Gewichtsgehalt von 20 % bis 30 % und das leitfähige Bindemittel in einem Gewichtsgehalt von 70 % bis 80 % umfasst;

wenn das Bindemittel das isolierende Bindemittel ist, die leitfähige Beschichtung das leitfähige Mittel in einem Gewichtsgehalt von 30 % bis 45 % und das isolierende Bindemittel in einem Gewichtsgehalt von 55 % bis 70 % umfasst.

2. Kathodenplatte nach Anspruch 1, wobei das leitfähige Bindemittel eines oder mehrere ausgewählt aus der Gruppe bestehend aus einem leitfähigen Epoxidharzklebstoff, einem leitfähigen Silikonharzklebstoff, einem leitfähigen Polyimidharzklebstoff, einem leitfähigen Phenolharzklebstoff und einem leitfähigen Polyurethanklebstoff ist.

3. Kathodenplatte nach Anspruch 1, wobei das isolierende Bindemittel eines oder mehrere ausgewählt aus der Gruppe bestehend aus PVDF, einem Polyacrylnitril, einem Styrolbutadienkautschuk, einem Polyvinylalkohol, einem Gummi arabicum, einem Xanthangummi und einem Polyacrylat ist.

4. Kathodenplatte nach einem der Ansprüche 1 bis 3, wobei das leitfähige Mittel eines oder mehrere ausgewählt aus der Gruppe bestehend aus einem Acetylenruß, einer Kohlenstofffaser, einem leitfähigen Ruß, einem leitfähigen Graphit, einer einwandigen Kohlenstoffnanoröhre, einer mehrwandigen Kohlenstoffnanoröhre, einem Graphen-Nanoblatt, einem Graphenoxid-Nanoblatt und einem mikropulverisierten Graphit ist.

5. Kathodenplatte nach einem der Ansprüche 1 bis 4, wobei die leitfähige Beschichtung eine Dicke von 0,5 $\mu$m bis 5 $\mu$m aufweist, wobei gegebenenfalls die Dicke der leitfähigen Beschichtung 0,8 $\mu$m bis 3 $\mu$m beträgt.

6. Kathodenplatte nach einem der Ansprüche 1 bis 5, wobei der Stromabnehmer eine Aluminiumfolie ist, wobei gegebenenfalls die Aluminiumfolie eine Dicke von 8 $\mu$m bis 20 $\mu$m aufweist und/oder der Stromabnehmer sowohl eine Längszugfestigkeit als auch eine Querzugfestigkeit von $\geq$175 MPa aufweist.

7. Sekundärbatterie umfassend die Kathodenplatte nach einem der Ansprüche 1-6.

8. Sekundärbatterie nach Anspruch 7, wobei die Sekundärbatterie einen Elektrolyten enthält, der Elektrolyt ein Lithiumsalz umfasst und das Lithiumsalz ein Lithium-Fluor-enthaltendes Sulfonimid und Lithiumhexafluorophosphat umfasst;

wobei gegebenenfalls der Elektrolyt ferner wenigstens eine der folgenden Bedingungen erfüllt:

(1) das Lithium-Fluor-enthaltende Sulfonimid ist eines oder mehrere ausgewählt aus der Gruppe bestehend aus Lithiumbisfluorsulfonylimid, Lithiumbis(trifluormethyl)fluorsulfonylimid, Lithium(fluorsulfonyl)(trifluormethylsulfonyl)imid, Lithium(fluorsulfonyl)(pentafluorethylsulfonyl)imid, Lithium(trifluormethylsulfonyl)(difluormethylsulfonyl)imid, Lithium(fluorsulfonyl)(perfluorbutylsulfonyl)imid und Lithium-bis(pentafluorethylsulfonyl)imid;
(2) das Lithiumsalz in dem Elektrolyten weist eine Gesamtkonzentration von 0,6 mol/l bis 2 mol/l auf;
(3) in dem Elektrolyten weist das Lithiumhexafluorophosphat eine Konzentration C1 von 0,1 mol/l bis 1 mol/l auf und weist das Lithium-Fluor-enthaltende Sulfonimid eine Konzentration C2 von 0,5 mol/l bis 1,5 mol/l auf;
(4) in dem Elektrolyten erfüllen die Konzentration C1 des Lithiumhexafluorophosphats und die Konzentration C2 des Lithium-Fluor-enthaltenden Sulfonylimids: $1 \leq$ C2/C1 $\leq$ 5.

9. Sekundärbatterie nach Anspruch 8, wobei eine Dicke d der leitfähigen Beschichtung der Kathodenplatte, die Konzentration C1 des Lithiumhexafluorophosphats und die Konzentration C2 des Lithium-Fluor-enthaltenden Sulfonimids dem folgenden Beziehungsausdruck entsprechen:

$$C2/(5 \times C1) \leq d \leq \lg(C2/C1) + 4,$$

wobei eine Einheit von C1 und C2 mol/l ist und eine Einheit von d $\mu$m ist.

10. Sekundärbatterie nach Anspruch 8 oder 9, wobei der Elektrolyt ferner ein organisches Lösungsmittel und ein Additiv umfasst; und das organische Lösungsmittel eines oder mehrere ausgewählt aus der Gruppe bestehend aus Dimethylcarbonat, Diethylcarbonat, Dipropylcarbonat, Ethylmethylcarbonat, Methylpropylcarbonat, Vinylcarbonat, Propylencarbonat, Vinylcarbonat, Propylencarbonat, Butylencarbonat, Ethylpropylcarbonat, $\gamma$-Butyrolacton, Methylformiat, Ethylacetat, Propylacetat, Methylpropionat, Ethylpropionat, Methylpropionat und Tetrahydrofuran ist; und/oder

das organische Lösungsmittel in dem Elektrolyten einen Gewichtsgehalt von 65 % bis 85 % aufweist; und/oder das Additiv wenigstens eines ausgewählt aus der Gruppe bestehend aus Vinylencarbonat, Vinylsulfat, Lithiumdifluoroxalatborat, Lithiumdifluorphosphat, Lithiumtetrafluorborat, 1,3-Propansulton, Lithiumtrifluormethansulfonat und Lithiumdiacetatborat ist; und/oder das Additiv in dem Elektrolyten einen Gesamtgewichtsgehalt von 0,5 % bis 7 % aufweist.

11. Sekundärbatterie nach Anspruch 7, wobei ein Anoden-Aktivmaterial der Anodenfolie eines oder mehrere ausgewählt aus der Gruppe bestehend aus einem natürlichen Graphit, einem künstlichen Graphit, einem Mesophasen-Mikrokohlenstoff, einem harten Kohlenstoff, einem weichen Kohlenstoff, Silicium, einem Silicium-Kohlenstoff-Verbundstoff, einer Li-Sn-Legierung, einer Li-Sn-O-Legierung, Sn, SnO, $SnO_2$, einem lithiierten $TiO_2$-$Li_4Ti_5O_{12}$ in Spinell-struktur und einer Li-Al-Legierung ist.

12. Batteriemodul umfassend eine Sekundärbatterie, wobei die Sekundärbatterie die Sekundärbatterie nach einem der Ansprüche 7 bis 11 ist.

13. Batteriepack umfassend ein Batteriemodul, wobei das Batteriemodul das Batteriemodul nach Anspruch 12 ist.

14. Elektrische Vorrichtung, umfassend eine Sekundärbatterie oder ein Batteriemodul oder ein Batteriepack, wobei die Sekundärbatterie ausgewählt ist aus der Sekundärbatterie nach einem der Ansprüche 7 bis 11, das Batteriemodul das Batteriemodul nach Anspruch 12 ist oder das Batteriepack das Batteriepack nach Anspruch 13 ist.

**Revendications**

1. Plaque de cathode comprenant :

un collecteur de courant ;
un revêtement conducteur, dans lequel le revêtement conducteur est disposé sur au moins une surface du collecteur de courant, le revêtement conducteur comprend un agent conducteur ayant une teneur en poids de 20 % à 50 % et un liant ayant une teneur en poids de 50 % à 80 % ; et une couche active de cathode, dans laquelle la couche active de cathode est agencée sur une surface du revêtement conducteur à l'opposé du collecteur de courant, et un matériau actif de cathode dans la couche active de cathode comprend au moins l'une des Formules (I) à (III) :

$$Li_{a1}Ni_{c1}Co_{y1}M1_{z1}M2_{1-x1y1z1}O_{2-b1} \qquad \text{Formule (1)}$$

$$Li_{a2}Mn_{2-y2}M3_{y2}O_{4-b2} \qquad \text{Formule (II)}$$

$$cLi_2MnO_3 \cdot (1-c)Li_{a3}M4_{x3}O_{2-b3} \qquad \text{Formule (III)}$$

dans la Formule (I), M1 est Mn et/ou Al, M2 est un ou plusieurs quelconques choisis dans le groupe constitué par Mg, Cu, Zn, Al, Sn, B, Ga, Zr, Cr, Sr, V, et Ti, $0,8 \leq a1 < 1,2$, $0 \leq x1 < 1$, $0 \leq y1 \leq 1$, $0 \leq z1 \leq 1$, $x1 + y1 + z1 \leq 1$, $-0,2 \leq b1 \leq 0,2$ ;
dans la Formule (II), $0,8 \leq a2 < 1,2$, $0,6 \leq y2 \leq 1$, $-0,2 \leq b2 \leq 0,2$, M3 est un ou plusieurs quelconques choisis dans le groupe constitué par Mg, Cu, Zn, Al, Sn, B, Ga, Zr, Cr, Sr, V, et Ti ; et
dans la Formule (III), $0 < c < 1$, $0 < x3 < 1$, $0,8 < a3 < 1,2$, $-0,2 \leq b3 \leq 0,2$, M4 est un quelconque choisi parmi Ni, Co et Mn, et un ou plusieurs quelconques choisis dans le groupe constitué par Mg, Cu, Zn, Al, Sn, B, Ga, Zr, Cr, Sr, V, et Ti ;
**caractérisée en ce que**
le liant est l'un parmi : un liant conducteur, le liant conducteur ayant une résistivité volumique de $\leq 10^{-3}$ $\Omega$•cm, et un liant isolant, le liant isolant ayant une résistivité volumique de $\geq 10^{10}$ $\Omega$•cm ;
lorsque le liant est le liant conducteur, le revêtement conducteur comprend l'agent conducteur ayant une teneur en poids de 20 % à 30 % et le liant conducteur ayant une teneur en poids de 70 % à 80 % ;
lorsque le liant est le liant isolant, le revêtement conducteur comprend l'agent conducteur ayant une teneur en poids de 30 % à 45 % et le liant isolant ayant une teneur en poids de 55 % à 70 %.

2. Plaque de cathode selon la revendication 1, dans laquelle le liant conducteur est un ou plusieurs quelconques choisis dans le groupe constitué par un adhésif conducteur de résine époxy, un adhésif conducteur de résine de silicone, un adhésif conducteur de résine de polyimide, un adhésif conducteur de résine phénolique et un adhésif conducteur de polyuréthane.

3. Plaque de cathode selon la revendication 1, dans laquelle le liant isolant est un ou plusieurs quelconques choisis dans le groupe constitué par un PVDF, un polyacrylonitrile, un caoutchouc styrène butadiène, un poly(alcool vinylique), une gomme arabique, une gomme xanthane et un polyacrylate.

4. Plaque de cathode selon l'une quelconque des revendications 1 à 3, dans laquelle l'agent conducteur comprend un ou plusieurs quelconques choisis dans le groupe constitué par un noir d'acétylène, une fibre de carbone, un noir de carbone conducteur, un graphite conducteur, un nanotube de carbone à paroi unique, un nanotube de carbone à parois multiples, une nanofeuille de graphène, une nanofeuille d'oxyde de graphène et un graphite micropoudré.

5. Plaque de cathode selon l'une quelconque des revendications 1 à 4, dans laquelle le revêtement conducteur a une épaisseur de 0,5 μm à 5 μm, éventuellement, l'épaisseur du revêtement conducteur est de 0,8 μm à 3 μm.

6. Plaque de cathode selon l'une quelconque des revendications 1 à 5, dans laquelle le collecteur de courant est une feuille d'aluminium, éventuellement, la feuille d'aluminium a une épaisseur de 8 μm à 20 μm, et/ou le collecteur de courant a à la fois une résistance à la traction longitudinale et une résistance à la traction transversale de ≥ 175 MPa.

7. Batterie secondaire, comprenant la plaque de cathode selon l'une quelconque des revendications 1 à 6.

8. Batterie secondaire selon la revendication 7, dans laquelle la batterie secondaire contient un électrolyte, l'électrolyte comprend un sel de lithium, et le sel de lithium comprend un sulfonimide contenant du fluorure de lithium et de l'hexafluorophosphate de lithium ;
éventuellement, l'électrolyte satisfait en outre au moins l'une des conditions suivantes :

(1) le sulfonimide contenant du fluorure de lithium est un ou plusieurs quelconques choisis dans le groupe constitué par bisfluorosulfonylimide de lithium, bis(trifluorométhyl)fluorosulfonylimide de lithium, (fluorosulfonyl)(trifluorométhylsulfonyl)imide de lithium, (fluorosulfonyl)(pentafluoroéthylsulfonyl)imide de lithium, (trifluorométhylsulfonyl)(difluorométhylsulfonyl)imide de lithium, (fluorosulfonyl)(perfluorobutylsulfonyl)imide de lithium et bis(pentafluoroéthylsulfonyl)imide de lithium ;
(2) le sel de lithium dans l'électrolyte a une concentration totale de 0,6 mol/L à 2 mol/L ;
(3) dans l'électrolyte, l'hexafluorophosphate de lithium a une concentration C1 de 0,1 mol/L à 1 mol/L, et le sulfonimide contenant du fluorure de lithium a une concentration C2 de 0,5 mol/L à 1,5 mol/L ;
(4) dans l'électrolyte, la concentration C1 de l'hexafluorophosphate de lithium et la concentration C2 du sulfonylimide contenant du fluorure de lithium satisfont : $1 \leq C2/C1 \leq 5$.

9. Batterie secondaire selon la revendication 8, dans laquelle une épaisseur d du revêtement conducteur de la plaque de cathode, la concentration C1 de l'hexafluorophosphate de lithium et la concentration C2 du sulfonimide contenant du fluorure de lithium satisfont l'expression relationnelle suivante :

$$C2/(5 \times C1) \leq d \leq \lg(C2/C1) + 4,$$

dans laquelle, une unité de C1 et C2 est mol/L, et une unité de d est μm.

10. Batterie secondaire selon la revendication 8 ou 9, dans laquelle l'électrolyte comprend en outre un solvant organique et un additif ; et le solvant organique est un ou plusieurs quelconques choisis dans le groupe constitué par carbonate de diméthyle, carbonate de diéthyle, carbonate de dipropyle, carbonate d'éthyle et de méthyle, carbonate de méthyle et de propyle, carbonate de vinyle, carbonate de propylène, carbonate de vinyle, carbonate de propylène, carbonate de butylène, carbonate d'éthyle et de propyle, γ-butyrolactone, formiate de méthyle, acétate d'éthyle, acétate de propyle, propionate de méthyle, propionate d'éthyle, propionate de méthyle et tétrahydrofurane ; et/ou,

le solvant organique dans l'électrolyte présente une teneur en poids de 65 % à 85 % ; et/ou,
l'additif est au moins l'un choisi dans le groupe constitué par carbonate de vinylène, sulfate de vinyle, difluorooxalate borate de lithium, difluorophosphate de lithium, tétrafluoroborate de lithium, 1,3-propane sultone, trifluorométhanesulfonate de lithium et diacétate borate de lithium ; et/ou,
l'additif dans l'électrolyte a une teneur en poids totale de 0,5 % à 7 %.

**11.** Batterie secondaire selon la revendication 7, dans laquelle un matériau actif d'anode de la feuille d'anode comprend un ou plusieurs quelconques choisis dans le groupe constitué par un graphite naturel, un graphite artificiel, un microcarbone en mésophase, un carbone dur, un carbone mou, du silicium, un composite silicium-carbone, un alliage Li-Sn, un alliage Li-Sn-O, Sn, SnO, $SnO_2$, un $TiO_2$-$Li_4Ti_5O_{12}$ lithié dans une structure de spinelle, et un alliage Li-Al.

**12.** Module de batterie, comprenant une batterie secondaire, la batterie secondaire étant la batterie secondaire selon l'une quelconque des revendications 7 à 11.

**13.** Bloc-batterie, comprenant un module de batterie, dans lequel le module de batterie est le module de batterie selon la revendication 12.

**14.** Dispositif électrique, comprenant une batterie secondaire ou un module de batterie ou un bloc-batterie, dans lequel la batterie secondaire est choisie parmi la batterie secondaire selon l'une quelconque des revendications 7 à 11, le module de batterie est le module de batterie selon la revendication 12, ou le bloc-batterie est le bloc-batterie selon la revendication 13.

FIG. 1

**5**

FIG. 2

5

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10483548 B2
- WO 2021127997 A1
- CN 113410427 A
- CN 106816575
- CN 111952668 A
- CN 107611479 A
- CN 13851724 A